Europäisches Patentamt

European Patent Office

Office européen des brevets

(11) Veröffentlichungsnummer: **0 404 171**
**A1**

# (12) EUROPÄISCHE PATENTANMELDUNG

(21) Anmeldenummer: **90111854.7**

(22) Anmeldetag: **22.06.90**

(51) Int. Cl.5: **A01K 1/01**

(30) Priorität: **23.06.89 DE 8907666 U**

(43) Veröffentlichungstag der Anmeldung:
**27.12.90 Patentblatt 90/52**

(84) Benannte Vertragsstaaten:
**AT BE CH DE DK ES FR GB GR IT LI LU NL SE**

(71) Anmelder: **Wagner, Rosa, geb. Schwarz**
**Jahnstrasse 10**
**D-8970 Immenstadt(DE)**

(72) Erfinder: **Wagner, Rosa, geb. Schwarz**
**Jahnstrasse 10**
**D-8970 Immenstadt(DE)**

(74) Vertreter: **Hutzelmann, Gerhard**
**Duracher Strasse 22**
**D-8960 Kempten(DE)**

(54) **Wannenförmiges Formteil.**

(57) Wannenförmiges, als Katzen-Clo dienendes Formteil(1,21) aus Kunststoff od.dgl., das einen innerhalb eines Randabschnittes liegenden Längsschlitz(4,24) aufweist, dessen beiden Längsrändern unter einem Winkel zur Horizontalen verlaufende Schrägflächen(5,6,25,26) benachbart sind, an welche jeweils eine Standfläche(7,8,27,28) anschließt, die zur benachbarten Schrägfläche geringfügig geneigt und mit einer rauhen Oberfläche versehen ist.

Fig. 1

EP 0 404 171 A1

# Wannenförmiges Formteil

Die Erfindung betrifft ein wannenförmiges, als Katzen-Clo dienendes Formteil, aus Kunststoff od.dgl..

Derartige Formteile werden meistens in Verbindung mit Katzenstreu als Katzenclo verwendet, wobei vielfach der Transport der Katzenstreu als beschwerlich angesehen wird.

Der Erfindung liegt die Aufgabe zugrunde, ein derartiges Formteil so auszugestalten, daß auf Katzenstreu verzichtet werden kann und trotzdem keinerlei Geruchsbelästigung eintritt.

Diese Aufgabe wird erfindungsgemäß dadurch gelöst, daß das Formteil einen innerhalb eines Randabschnittes liegenden Längsschlitz aufweist, dessen beiden Längsrändern unter einem Winkel zur Horizontalen verlaufende Schrägflächen benachbart sind, an welche jeweils eine Standfläche anschließt, die zur benachbarten Schrägfläche geringfügig geneigt und mit einer rauhen Oberfläche versehen ist.

Die Katze kann sich mit ihren vier Füßen auf der rauhen Standfläche abstützen, während sie ihren Kot bzw Urin in den Längsschlitz fallen läßt. Die benachbarten Schrägflächen dienen dabei als Leitflächen und verhindern, daß die Standflächen beschmutzt werden.

Als sehr vorteilhaft hat es sich ergeben, wenn erfindungsgemäß die Schrägflächen in einem Winkel zur Horizontalen angeordnet sind, der zwischen 15 und 75°, vorzugsweise zwischen 45 und 65° beträgt.

Mit derart angeordneten Schrägflächen ist eine einwandfreie Abfuhr von Kot und Urin gewährleistet und das Formteil ist darüber hinaus leicht herstellbar.

Sehr vorteilhaft ist es auch, wenn gemäß der Erfindung die Standflächen mit einem umlaufende Wulst umgeben sind, der über diese Standflächen in der Höhe hinausragt.

Dieser Wulst zeigt der Katze eine eindeutige Abgrenzung ihres Standbereiches und dient zusätzlich zur Versteifung des Formteils.

Ebenfalls sehr vorteilhaft ist es, wenn um den Wulst herum ein Randstreifen vorgesehen ist, der zur Abstützung des Formteils an einem wannenartigen Bauteil vorgesehen ist.

Dabei kann erfindungsgemäß das wannenartige Bauteil aus Kunststoff od.dgl. tiefgezogen sein und einen umlaufenden Stützrand für das Formteil sowie zwei an seinen Längsseiten eingeformte Griffmulden aufweisen.

Dieses wannenartige Bauteil dient zum Einen der Aufnahme und Abstützung des Formteils, kann aber zusätzlich mit Wasser befüllt werden, so daß eine Geruchsbindung ermöglicht wird.

Erfindungsgemäß ist es aber auch möglich, daß als wannenartiges Bauteil ein Spülclosett vorgesehen ist, wobei der Randstreifen zwischen Clo-Rand und Clo-Brille eingespannt ist und eine diesen beiden angepaßte ovale Form aufweist.

Damit ist es möglich ein ohnehin vorhandenes Spülclosett auch als Katzen-Clo zu verwenden und deren Kot und Urin mit der Wasserspülung zu entfernen.

In der Zeichnung ist die Erfindung anhand zweier Ausführungsbeispiele veranschaulicht. Dabei zeigen:

Fig.1 einen Querschnitt durch ein Formteil mit einem wannenartigen Bauteil als Unterteil,

Fig.2 eine Draufsicht auf das Formteil nach Fig.1,

Fig3. einen Querschnitt durch ein in Verbindung mit einem Spülclosett zu verwendendes Formteil und

Fig.4 eine Draufsicht auf das Formteil nach Fig.3.

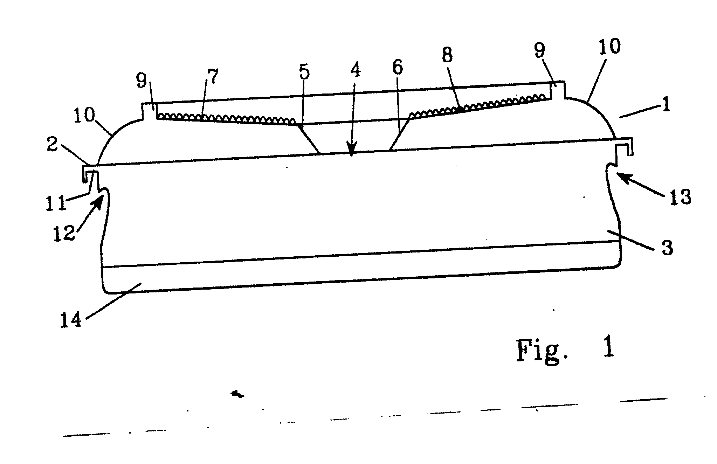

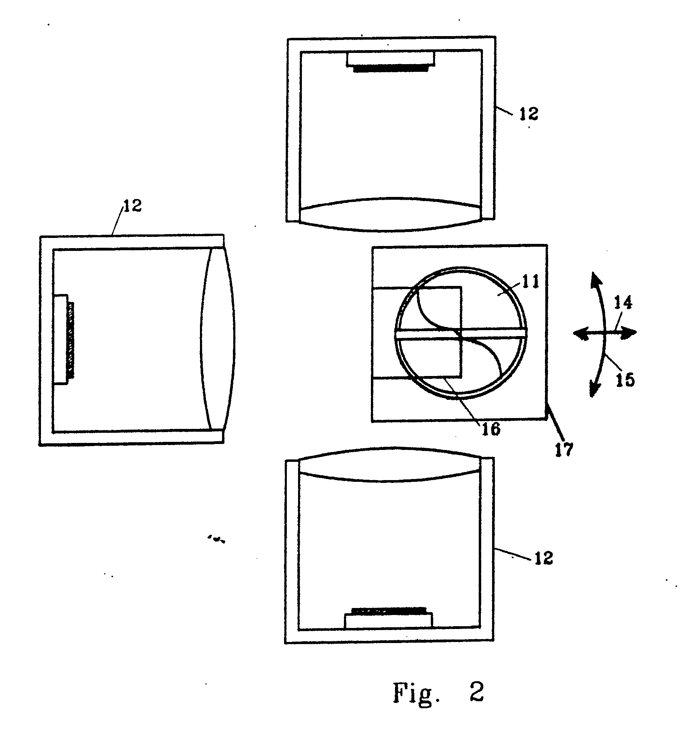

Mit 1 ist in den Fig.1 und 2 ein wannenförmiges Formteil bezeichnet, das mit einem winkelförmig ausgebildeten Rahmen 2 versehen ist, mit dem sich das Formteil auf einem als Unterteil dienenden wannenartigen Bauteil 3 abstützt. Das Formteil 1 ist in seiner Mitte mit einem Längsschlitz 4 versehen, an dessen beiden Längsrändern je eine Schrägfläche 5 und 6 anschließen. Diese beiden Schrägflächen verlaufen unter einem Winkel von 45° zur Horizontalen und gehen dann in Standflächen 7 bzw. 8 über, die nur geringfügig (etwa 5°) aus der Horizontalen gegen die jeweilige Schrägfläche hin geneigt ist. Der Winkel der Schrägflächen gegenüber der Horizontalen kann dabei zwischen 15 und 75° betragen, wobei Winkel von 45 bis 65° besoners vorteilhaft sind und sich ein Winkel von 48 bis 63° sich in der Praxis bestens bewährt hat. Die beiden Standflächen sind mit einer rauhen Oberfläche versehen und von einem umlaufenden Wulst 9 umgeben, der die gesamte Standfläche nach außen abgrenzt und zusätzlich das Formteil versteift. An den beiden Schmalseiten des Längsschlitzes 4 betragen die entsprechenden Winkel der dortigen Schrägflächen zwischen 15 und 90° zur Horizontalen, wobei sich ein Winkel von 60 bis 75° als besonders günstig erwiesen hat. Um den Wulst 9 herum verläuft ein Randstreifen 10, an dem wiederum der Rahmen 2 angeformt ist, wobei der Randstreifen schräg nach unten verläuft um den Höhenunterschied zwischen Wulst 9 und Rahmen 2 auszugleichen. Das wannenartige Bauteil 3 (Unterteil) ist mit einem Rand 11 versehen, der in den Rahmen 2 des Formteils 1 paßt, wodurch beide Teile gegen seitliches Verschieben gesichert sind. An den beiden Längsseiten ist das wannenartige Bauteil 3 mit je einer Griffmulde 12 und 13 versehen, in denen es zum Entleeren ergriffen werden kann. Das Bauteil kann in seinem unteren Abschnitt 14 mit Wasser befüllt werden, dem eventuell geruchsbindende Mittel zugefügt sind.

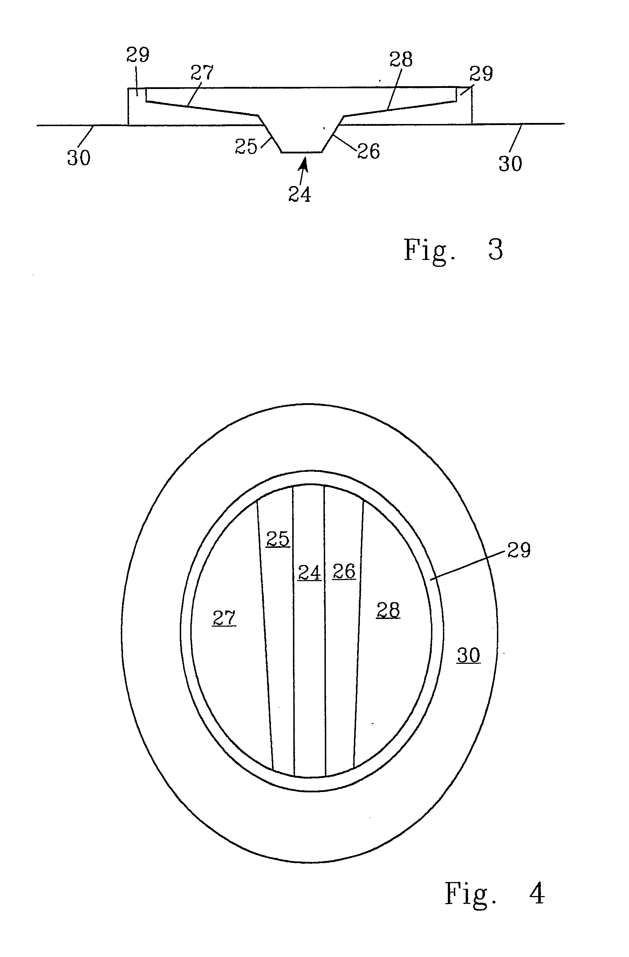

Beim Ausführungsbeispiel gemäß Fig.3 und 4 unterscheiden sich der Längsschlitz 24, die beiden Schrägflächen 25 und 26 sowie die Standflächen 27 und 28 nicht wesentlich von denen des ersten Ausführungsbeispiels. Lediglich der die Standflächen umgebende Wulst 29 hat einen ovalen Verlauf, was auch für den Randstreifen 30 zutrifft, der im wesentlichen eben ausgebildet ist und mit dem das Formteil 21 zwischen den Rand eines nicht dargestellten Spülclosett und dessen Brille eingespannt werden kann.

**Ansprüche**

1. Wannenförmiges, als Katzen-Clo dienendes Formteil, aus Kunststoff od.dgl., **dadurch gekennzeichnet**, daß das Formteil(1,21) einen innerhalb eines Randabschnittes liegenden Längsschlitz(4,24) aufweist, dessen beiden Längsrändern unter einem Winkel zur Horizontalen verlaufende Schrägflächen(5,6,25,26) benachbart sind, an welche jeweils eine Standfläche(7,8,27,28) anschließt, die zur benachbarten Schrägfläche geringfügig geneigt und mit einer rauhen Oberfläche versehen ist.

2. Formteil nach Anspruch 1, **dadurch gekennzeichnet**, daß die Schrägflächen(5,6,25,26) in einem Winkel zur Horizontalen angeordnet sind, der zwischen 15 und 75°, vorzugsweise zwischen 45 und 65° beträgt.

3. Formteil nach Anspruch 1 od. 2, **dadurch gekennzeichnet**, daß die Standflächen(7,8,27,28) mit einem umlaufende Wulst(9,29) umgeben sind, der über diese Standflächen in der Höhe hinausragt.

4. Formteil nach Anspruch 3, **dadurch gekennzeichnet**, daß um den Wulst(9,29) herum ein Randstreifen(2,10,30) vorgesehen ist, der zur Abstützung des Formteils(1,21) an einem wannenartigen Bauteil(3) vorgesehen ist.

5. Formteil nach Anspruch 4, **dadurch gekennzeichnet**, daß das wannenartige Bauteil(3) aus Kunststoff od.dgl. tiefgezogen ist und einen umlaufenden Stützrand(11) für das Formteil(1) sowie zwei an seinen Längsseiten eingeformte Griffmulden(12,13) aufweist.

6. Formteil nach Anspruch 4, **dadurch gekennzeichnet**, daß als wannenartiges Bauteil ein Spülclosett vorgesehen ist, wobei der Randstreifen(30) zwischen Clo-Rand und Clo-Brille eingespannt ist und eine diesen beiden angepaßte ovale Form

aufweist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-1384796 (TEPES) <br> * das ganze Dokument * | 1 | A01K1/01 |
| A | | 2, 4 | |
| | --- | | |
| Y | US-A-3688742 (MCGEE) <br> * Spalte 3, Zeile 25 - Spalte 4, Zeile 21; Figuren 4-6 * | 1 | |
| A | | 4, 6 | |
| | --- | | |
| A | US-A-2741223 (WINBORN) <br> * Spalte 2, Zeile 48 - Spalte 3, Zeile 42; Figuren 1-4 * | 1, 3, 4, 5 | |
| | --- | | |
| A | CH-A-096447 (RITTER) <br> * das ganze Dokument * | 1-5 | |
| | --- | | |
| A | US-A-3949429 (HALL) <br> * Spalte 5, Zeilen 13 - 59; Figuren 1-4 * | 1, 6 | |
| | --- | | |
| A | US-A-3324828 (JOHNSON) <br> * Spalte 2, Zeilen 10 - 13; Figuren 1, 2 * | 1 | |
| | --- | | |

RECHERCHIERTE SACHGEBIETE (Int. Cl.5 )

A01K

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1990 | VON ARX V.U. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes
     Dokument

EPO FORM 1503 03.82 (P0403)